(19) Europäisches Patentamt
European Patent Office
Office européen des brevets

(11) **EP 4 234 802 B1**

(12) **EUROPEAN PATENT SPECIFICATION**

(45) Date of publication and mention
of the grant of the patent:
**24.06.2026 Bulletin 2026/26**

(51) International Patent Classification (IPC):
*D06M 11/79* (2006.01)    *D06M 11/44* (2006.01)
*D06M 15/564* (2006.01)    *D06M 15/643* (2006.01)
*D03D 11/02* (2006.01)    *B60R 21/235* (2006.01)

(21) Application number: **21915671.8**

(22) Date of filing: **23.12.2021**

(52) Cooperative Patent Classification (CPC):
**D03D 1/02; B60R 21/235; D03D 13/008;
D03D 15/208; D03D 15/275; D03D 15/283;
D06N 3/0006; D06N 3/0036; D06N 3/0063;
D06N 3/0088; D06N 3/128;** B60R 2021/23514;
D06N 2205/14; D06N 2211/263; D06N 2211/268;
(Cont.)

(86) International application number:
**PCT/KR2021/019706**

(87) International publication number:
**WO 2022/145873 (07.07.2022 Gazette 2022/27)**

(54) **COATED FABRIC AND AIRBAG COMPRISING SAME**

BESCHICHTETES GEWEBE UND AIRBAG DAMIT

TISSU ENDUIT ET COUSSIN DE SÉCURITÉ GONFLABLE LE COMPRENANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.12.2020 KR 20200186479
22.12.2021 KR 20210185280**

(43) Date of publication of application:
**30.08.2023 Bulletin 2023/35**

(73) Proprietor: **Kolon Industries, Inc.
Seoul 07793 (KR)**

(72) Inventors:
• **KIM, Hyo Eun**
**Seoul 07793 (KR)**
• **CHUNG, Il**
**Seoul 07793 (KR)**
• **KIM, Ki Jeong**
**Seoul 07793 (KR)**
• **HEO, Jin Wook**
**Seoul 07793 (KR)**
• **PARK, Ji Hoon**
**Seoul 07793 (KR)**

(74) Representative: **Ter Meer Steinmeister & Partner
Patentanwälte mbB
Nymphenburger Straße 4
80335 München (DE)**

(56) References cited:
CN-U- 205 615 111    JP-A- 2001 018 740
JP-A- 2006 321 053    JP-A- 2013 170 326
JP-A- H02 132 705    KR-A- 20090 083 938
KR-A- 20100 012 674    KR-A- 20170 038 352
KR-B1- 101 908 778

(Cont. next page)

(52) Cooperative Patent Classification (CPC): (Cont.)
D10B 2101/12; D10B 2201/00; D10B 2321/02;
D10B 2331/02; D10B 2331/021; D10B 2331/04;
D10B 2331/061

Description

**[TECHNICAL FIELD]**

CROSS-REFERENCE TO RELATED APPLICATION(S)

This application claims the benefit of Korean Patent Application No. 10-2020-0186479 filed on December 29, 2020 and Korean Patent Application No. 10-2021-0185280 filed on December 22, 2021 in the Korean Intellectual Property Office.

TECHNICAL FIELD

The present application relates to a coated fabric and an air bag comprising the same.

**[BACKGROUND ART]**

Air bag is an apparatus for protecting vehicle users by exploding gunpowder after detecting crash impact with a sensor, and expanding a gas supplied to the inside of an airbag cushion, when an external force due to a collision or the like is applied to the vehicle. Because high-temperature and high-pressure gas is generated around the inflator involved in the cushion expansion process, the airbag fabric is damaged, which causes a decrease in the pressure resistance performance of the cushion.

In order to prevent such a phenomenon, conventionally, it was considered to use a high-density woven fabric or increase the coating weight, but this does not match the tendency of the airbag cushion to be smaller and lighter, and has a problem of deteriorating storability (foldability).

Coated insulating fabrics are known from CN 205 615 111 U in which a polymer coating, optionally containing ceramic particles, is applied to a textile substrate to improve thermal performance. Coated technical fabrics are known from JP H02-132705 A in which functional powder fillers dispersed in a binder layer are used to impart water-blocking and electrical properties. Sound-absorbing and heat-insulating sheet materials are known from JP 2006-321053 A in which short fibres and particulate phases are combined in multilayer structures for thermal and acoustic performance in automotive environments. Airbag fabrics with polymeric primer and gas-barrier layers are known from KR 10-1908778 B1 in which multilayer thermoplastic coatings are applied to reduce gas permeability during airbag deployment.

**[DETAILED DESCRIPTION OF THE INVENTION]**

**[Technical Problem]**

It is one object of the present application to provide a coated fabric capable of solving the above-mentioned problems caused by conventional technologies.

It is another object of the present application to provide a coated fabric having excellent foldability.

It is another object of the present application to provide a coated fabric having excellent heat resistance and durability even at low weight and/or low density.

It is yet another object of the present application to provide an air bag comprising the coated fabric.

The above and other objects of the present application can be completely achieved by the present application described below.

**[Technical Solution]**

In one embodiment, the present disclosure relates to a coated fabric. Specifically, the coated fabric comprises a fibrous substrate (A), and a coating layer (B) formed on the fibrous substrate.

In regard to the joining relationship between the fibrous substrate (A) and the coating layer (B) constituting the coated fabric, the "coating layer is formed on the fibrous substrate" as used herein means that a film (coating layer) is formed on the surface of the fibrous substrate (and/or the fiber forming the fibrous substrate) by the coating layer-forming material.

According to an embodiment of the present application, the coating layer (B) includes a binder resin and a filler, wherein the filler is present in a dispersed state in the coating layer or in the binder resin. The filler is contained in the coating layer (B) in an amount of 20% by weight or less, based on 100% by weight of the entire coating layer, wherein the filler comprises agglomerates of chopped ceramic fibers having a size in the range of 0.1 to 2.0 mm, wherein the chopped ceramic fiber comprises oxides, nitrides or carbides of at least one selected among Si, Al, Ti, Zr, Ca and Mg, wherein a coating amount of the coating layer to one layer of the fibrous substrate is 50 gsm to 100 gsm, and wherein the coated fabric has a weight of 280 g/m2 to 350 g/m2. Specifically, the filler may be CBF (ceramic bulk fiber) in an agglomerated state (namely agglomerated CBF).

In one embodiment, the fibrous substrate may include non-ceramic fibers. For example, the fibrous substrate may include organic fibers. When the fibrous substrate includes ceramic fibers, the characteristics such as tensile strength, tear strength and elongation, which are basically required for airbag fabric, are not good.

The type of the organic fiber contained in a fibrous substrate is not particularly limited. For example, the fibrous substrate may include at least one selected among a polyester fiber, an aramid fiber, a nylon fiber, a carbon fiber, a polyketone fiber, a cellulose fiber, a polyolefin fiber, and an acrylic fiber.

In one embodiment, the fiber contained in the fibrous substrate may have a fineness in the range of 450 to 1,100 dtex. Specifically, the lower limit of the fineness may be, for example, 500 dtex or more, 550 dtex or more, or 600 dtex or more, and the upper limit thereof may be, for example, 1000 dtex or less, 900 dtex or less, 800 dtex or less, 700 dtex or less, or 600 dtex or less. When the fineness of the fiber used satisfies the above range, it is advantageous to secure an appropriate level of lightweight property and mechanical property.

In one embodiment, the fibrous substrate may be a woven fabric or a non-woven fabric, or may include one or more of them.

In one embodiment, the fibrous substrate may include one or more layers. For example, the fibrous substrate may be a laminate including two or more (woven) fabric layers, a laminate including two or more nonwoven layers, or a laminate including one or more (woven) fabric layers and one or more nonwoven layers.

The fibrous substrate may have a low density characteristic in order to secure the foldability of the (coated) fabric for airbag.

In one embodiment, the fibrous substrate may be a fabric containing warp and weft threads, and the warp and weft densities of the fabric may be in the range of 20 to 55 th/inch, respectively. Specifically, the lower limit of the density of the warp or weft threads may be, for example, 25 th/inch or more, 30 th/inch or more, 35 th/inch or more, 40 th/inch or more, or 45 th/inch or more, and the upper limit thereof may be, for example, 50 th/inch or less or 45 th/inch or less. The density can be measured according to ISO 7211-2 (Section 3.07), but is not particularly limited thereto.

In the case of a conventional technology, in order to secure the airtightness of the fabric and prevent damage (or breakage) at the time of airbag inflation, it was considered to use a fibrous substrate woven at a high density (e.g., 70 th/inch) in at least one of the warp and weft threads. However, the use of the high-density fabric as described above not only hinders the weight reduction of the airbag, but also has poor foldability and storability of the airbag. In the present application, since the low-density fabric as described above is used, the fabrics and airbags can be made lightweight, and it is advantageous in securing the foldability and storability of the airbag. In particular, since the coated fabric of the present application has a coating layer described below, it is also excellent in heat resistance and durability.

The coating layer of the coated fabric according to the present application includes a ceramic fiber as a filler as described above. Since the ceramic fiber is a short fiber and has the tendency to agglomerate with each other in the coating layer or in the composition for forming the coating layer, it can provide sufficient heat resistance and durability than other types of fillers. The ceramic fiber (e.g., ceramic bulk fiber (CBF)) used herein has a stronger tendency to agglomerate. Therefore, the ceramic fiber used herein can provide superior heat resistance compared to a ceramic filler of the same size, that is, a conventional ceramic filler that is not in the form of a fiber (see Evaluation 2 below).

For example, in the embodiment of the present application, the ceramic fiber has a shape (bulk shape) in which chopped short fibers areagglomerated. In the coating layer, the fiber forms a plurality of agglomerates, and these agglomerates are dispersedly present in the coating layer or in the binder resin.

As confirmed in the Experimental Example below, Example using the coating layer in which the agglomerates of chopped ceramic fibers are dispersedly present, can have more excellent heat resistance and durability than Comparative Example 1 using a large amount of coating and Comparative Example 2 using a two-layer fabric.

According to the present invention the ceramic fiber, that is, the ceramic bulk fiber (CBF) have a size in the range of 0.1 to 2.0 mm. At this time, the size of the CBF can be confirmed through a known optical microscope or the like, and may mean the length of the largest dimension among the dimensions of the shape of the CBF.

Specifically, the size of the CBF (ceramic bulk fiber) may be, for example, 0.15 mm or more, 0.20 mm or more, 0.25 mm or more, 0.30 mm or more, 0.35 mm or more, 0.40 mm or more, 0.45 mm or more, 0.50 mm or more, 0.55 mm or more, 0.60 mm or more, 0.65 mm or more, 0.70 mm or more, 0.75 mm or more, 0.80 mm or more, 0.85 mm or more, 0.90 mm or more, 0.95 mm or more, 1.0 mm or more, 1.05 mm or more, 1.10 mm or more, 1.15 mm or more, 1.20 mm or more, 1.25 mm or more, 1.30 mm or more, 1.35 mm or more, 1.40 mm or more, 1.45 mm or more, or 1.50 mm or more. And, the upper limit of the size of the ceramic bulk fiber (CBF) may be, for example, 1.95 mm or less, 1.90 mm or less, 1.85 mm or less, 1.80 mm or less, 1.75 mm or less, 1.70 mm or less, 1.65 mm or less, 1.60 mm or less, 1.55 mm or less, 1.50 mm or less, 1.45 mm or less, 1.40 mm or less, 1.35 mm or less, 1.30 mm or less, 1.25 mm or less, 1.20 mm or less, 1.15 mm or less, 1.10 mm or less, 1.05 mm or less, 1.0 mm or less, 0.95 mm or less, 0.90 mm or less, 0.85 mm or less, 0.80 mm or less, 0.75 mm or less, 0.70 mm or less, 0.65 mm or less, 0.60 mm or less or 0.55 mm or less. The CBF agglomerated to have the above range can provide excellent heat resistance and durability.

In the embodiment according to the present application, the degree of dispersion of the agglomerates can be expressed by the area occupied by the agglomerates visually recognized in the coating layer relative to the area of the coating layer. For example, the agglomerates may occupy an area ranging from 1 to 25% of the total area of the coating layer. This area can be calculated by analyzing the surface of the coating layer with an optical microscope. Specifically, the degree of dispersion of the filler can be confirmed by a method of confirming the total area of one surface of the coating layer, confirming the area occupied by the filler (agglomerate) on one surface of the coating layer, and then calculating what percentage of the area of the coating layer the filler (agglomerate) occupies. At this time, the coating layer may be divided into a plurality of regions, and the area measured for each divided regions and its ratio may be calculated as an average value (arithmetic mean). The type of the optical microscope used in this regard is not particularly limited. Specifically, the ratio of the area occupied by the agglomerate to the total area of the coating layer may be, for example, 5% or more or 10% or more, and the upper limit thereof may be, for example, 20% or less or 15% or less.

According to the present invention the ceramic fiber includes oxides, nitrides, or carbides of at least one selected among Si, Al, Ti, Zr, Ca, and Mg.

In one embodiment, the ceramic fiber may include an oxide of at least one selected among Si, Al, Ti, Zr, Ca, and Mg.

In one embodiment, the ceramic fiber may include $SiO_2$, CaO, and MgO. When the ceramic fiber included in the coating layer include at least $SiO_2$, CaO and MgO, excellent heat resistance and durability can be secured as confirmed in Experimental Example below.

In one embodiment, the ceramic fiber may contain 50 to 60% by weight of $SiO_2$, 20 to 30% by weight of CaO, and 10 to 30% by weight of MgO. When the ceramic fiber contained in the coating layer contains $SiO_2$, CaO and MgO in the above content range, excellent heat resistance and durability can be secured as confirmed in Experimental Example below.

According to the present invention the coating amount of the coating layer for one layer of the fibrous substrate s 100 gsm ($g/m^2$) or less. Specifically, the lower limit of the coating amount is 50 gsm or more, 55 gsm or more, 60 gsm or more, 65 gsm or more, 70 gsm or more, 75 gsm or more, 80 gsm or more, 85 gsm or more, 90 gsm or more, or 95 gsm or more. And, the upper limit may be, for example, 95 gsm or less, 90 gsm or less, 85 gsm or less, 80 gsm or less, 75 gsm or less, 70 gsm or less, 65 gsm or less, or 60 gsm or less. Generally, it is expected that as the coating amount increases, the effect due to the coating increases. However, since the coating layer of the present application is a coating layer in which a ceramic fiber filler is dispersed, even when the coating amount is small, a higher coating effect (e.g., heat resistance and durability) can be secured than when ceramic fiber fillers are not used or when other types of fillers are used. The coating amount may be measured according to ISO 3801 (Section 3.07), but is not particularly limited thereto.

In one embodiment, the binder resin contained in the coating layer may include at least one selected among a silicone resin and a urethane resin. Specific components and properties of the silicone resin or the urethane resin are not particularly limited.

According to an embodiment of the present application, a silicone resin may be used as the binder resin. In this case, the specific type of the material capable of forming the silicone binder resin is not particularly limited. For example, the silicone resin may be or may include a silicone elastomer formed by crosslinking or curing polysiloxane. And, a siloxane compound known to be able to provide a silicone resin by polyaddition reaction can also be used as the silicone binder resin. In addition, known products, for example, TCS 7516 or TCS 7537 by Elkem Silicones can also be used for forming the coating layer including the silicone binder resin.

In one embodiment, the coating layer may include the filler in an amount of 20 % by weight or less, based on 100 % by weight of the total coating layer. At this time, 100% by weight of the entire coating layer may mean a total content based on the solid content of the binder resin and filler contained in the coating layer. Alternatively, the total content based on the solid content of the binder resin, the filler, and other components (e.g., additives) can be seen as 100% by weight of the entire coating layer. When the content of the filler exceeds the above range, the viscosity of the coating solution increases and so the dispersion is not uniform, and the effect due to the formation of the coating layer cannot be sufficiently obtained. The lower limit of the content of the filler is not particularly limited, and for example, it may be 1% by weight or more. Specifically, when considering the effect of improving heat resistance and durability due to the use of fillers, it is preferable that at least 5% by weight of the filler is used.

According to the present invention the weight ($g/m^2$) of the coated fabric having the above configuration is 350 $g/m^2$ or less. Specifically, the upper limit of the weight of the coated fabric may be, for example, 340 $g/m^2$ or less, 330 $g/m^2$ or less, 320 $g/m^2$ or less, 310 $g/m^2$ or less, or 300 $g/m^2$ or less, and the lower limit thereof is 280 $g/m^2$ or more, 290 $g/m^2$ or more, 300 $g/m^2$ or more, or 310 $g/m^2$ or more. When the weight of the coated fabric exceeds the above upper limit, it is difficult to reduce the weight, and the fabric preparing costs may increase. Further, when the weight of the coated fabric is less than the above lower limit, the mechanical properties may be reduced. The weight of the coated fabric can be measured according to ISO 3801 (Section 3.07), but is not particularly limited thereto.

**EP 4 234 802 B1**

In one embodiment, the thickness of the coated fabric having the above configuration may be in the range of 0.25 to 0.40 mm. At this time, the thickness of the fabric is based on one layer of the coated fabric. Specifically, the lower limit of the thickness may be 0.26 mm or more, 0.27 mm or more, 0.28 mm or more, 0.29 mm or more, or 0.30 mm or more, and the upper limit thereof may be, for example, 0.39 mm or less, 0.38 mm or less, 0.37 mm or less, 0.36 mm or less, 0.35 mm or less. When the thickness is less than the lower limit of the above range, it is difficult to secure sufficient mechanical properties, and when the thickness exceeds the above range, foldability is not good. The thickness can be measured according to ISO 5084 (Section 3.09), but is not particularly limited thereto.

In another embodiment according to the present application, there is provided a method of preparing a coated fabric.

Specifically, the method for preparing the coated fabric includes coating a composition including a binder resin and a filler onto a fiber substrate, and then curing the coated composition.

The filler includes chopped ceramic fibers agglomerates In addition, the details concerning the binder resin and filler are the same as described above, and thus will be omitted.

Coating may be performed so that a film (coating layer) of the composition can be formed on the surface of the fibrous substrate (and/or the fiber forming the fibrous substrate). In this regard, the method for coating the composition onto the fibrous substrate is not particularly limited, and may be appropriately performed according to a known method.

In one embodiment, curing may be performed at room temperature or higher. The room temperature is a temperature in a state where temperature increase or temperature decrease is not particularly performed, and mean a temperature of about 15 to 35°C. Further, the temperature greater than or equal to the room temperature is a temperature at which temperature increase is performed, and may mean a temperature exceeding 35°C, for example, a temperature in the range of 40 to 300 °C. The curing time at the temperature is not particularly limited, and the curing may be performed, for example, for several seconds (sec) to several tens of minutes (min).

In yet another embodiment according to the present application, there is provided an airbag. The airbag includes the above-described coated fabric.

The details concerning the configuration and characteristics of the coating fabric included in the airbag is the same as described above, and thus the description thereof will be omitted.

In one embodiment, the coated fabric may be used as a reinforcement fabric for an airbag. At this time, the reinforcement fabric means a configuration that is padded to prevent damage to the airbag cushion fabric in the inflation part of the airbag and the like. In this regard, a configuration in which the reinforcement fabric is padded among the configurations of the airbag can be referred to as a main panel. Therefore, the airbag is configured to include a main panel; and a reinforcement fabric attached to at least a partial area of the main panel.

In one embodiment, the main panel may have an area greater than or equal to the area of the reinforcement fabric.

In one embodiment, the main panel may include a fabric including at least one selected among a polyester fiber, an aramid fiber, a nylon fiber, a carbon fiber, a polyketone fiber, a cellulose fiber, a polyolefin fiber, and an acrylic fiber.

In one embodiment, the main panel may include a fabric having a density ranging from 45 to 55 th/inch in warp and weft threads.

In one embodiment, the main panel may have a coating layer. The coating layer of the main panel may include a generally known silicone resin or urethane resin, but is not limited thereto. When the coating is performed, the coating amount may be 20 to 40 gsm, but is not particularly limited thereto.

**[Advantageous Effects]**

According to the present application, even when a low-density coating layer is formed on the low-weight fabric in consideration of the weight reduction of airbags and coated fabrics, and the foldability and storability of airbag cushions, the coated fabric for an airbag having excellent heat resistance and durability can be provided.

**[BRIEF DESCRIPTION OF THE DRAWING]**

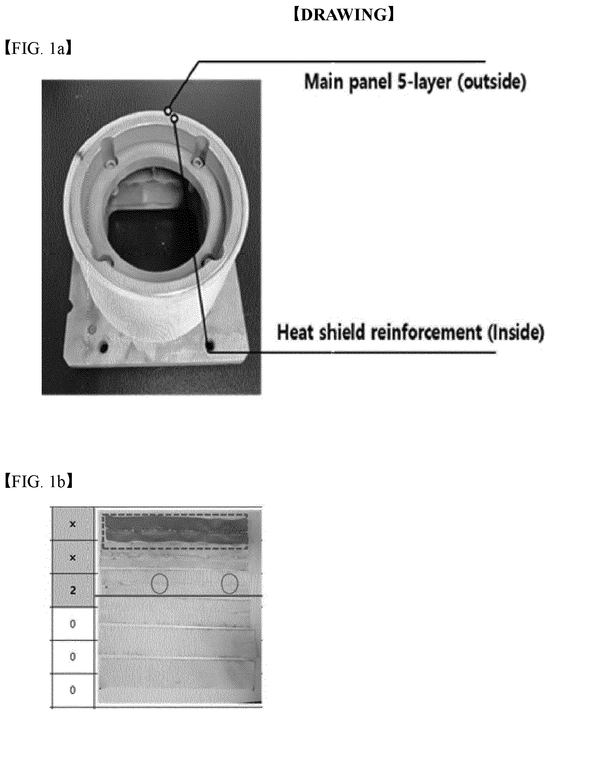

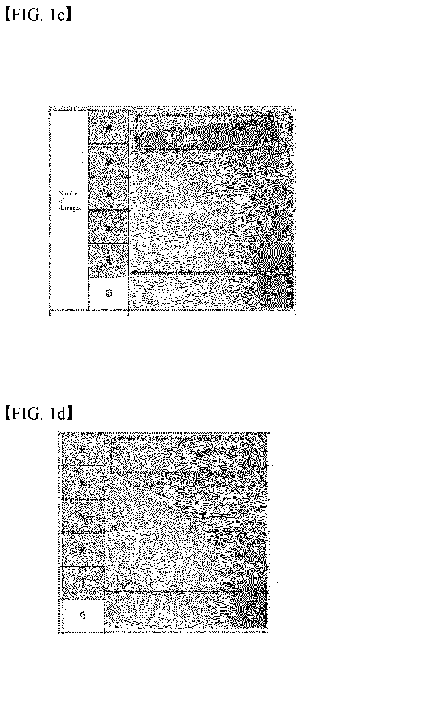

Fig. 1 schematically shows an inflator damage evaluation method and its results. Specifically, Fig. 1a is an image for schematically showing the method of installing the inflator and fabric used for the evaluation, and Figs. 1b, 1c and 1d are images obtained by photographing the heat resistance evaluation results of Example 1, Comparative Example 1, and Comparative Example 2, respectively.

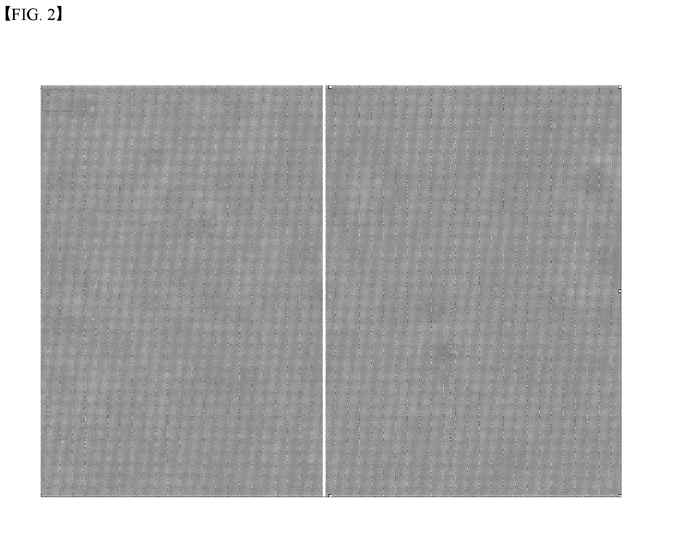

Fig. 2 is an image of the surface of the coating layer according to an embodiment of the present application taken with an optical microscope. It can be confirmed that the agglomerated form of the filler is visually recognized in a darker shade. The size of the filler confirmed in Fig. 2 is in the range of 0.1 to 2.0 mm.

6

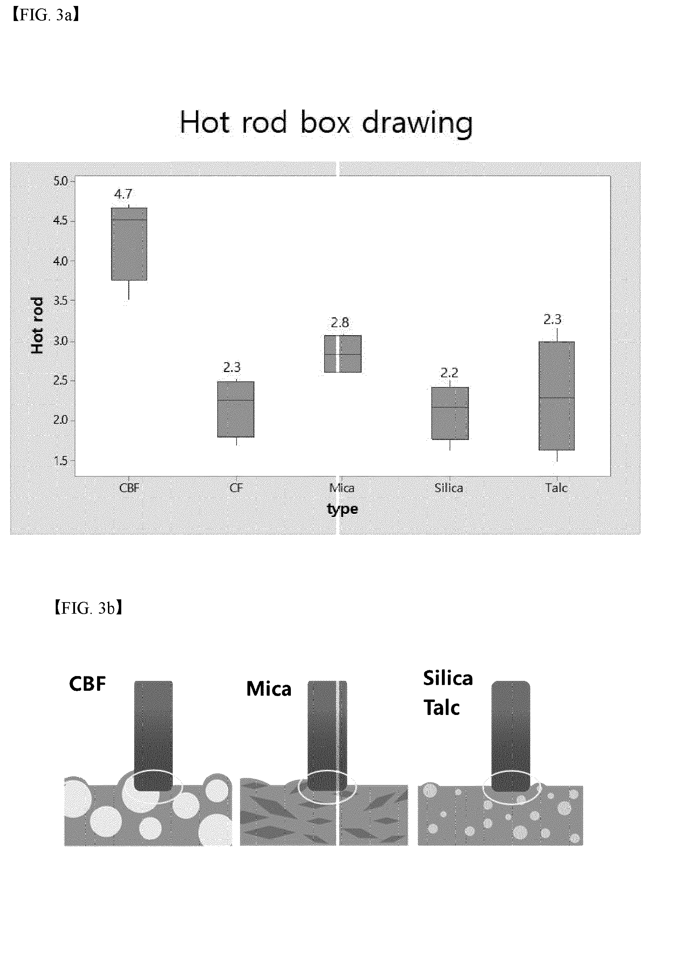

Fig. 3 is a view showing a comparison of heat resistance and durability evaluation results (hot-rod evaluation) and agglomeration characteristics according to the type of filler. Specifically, FIG. 3a is an experimental result showing that the CBF (ceramic bulk fiber) provides better heat resistance and durability through hot-rod evaluation. Further, Fig. 3b is a schematic diagram for explaining the reason why heat resistance and durability differ depending on the type of filler and the agglomeration characteristics. As shown in Fig. 3b, since the CBF has a stronger tendency to agglomerate compared to other ceramic fillers, damage to the coating layer forming resin can be suppressed under high temperature/high pressure conditions.

**[DETAILED DESCRIPTION OF THE EMBODIMENTS]**

Hereinafter, the action and effect of the invention will be described in more detail with reference to specific examples of the invention. However, these examples are presented for illustrative purposes only and the scope of the invention is not limited thereby in any way.

**Example and Comparative Example**

**Example 1**

Preparation of coating composition: A composition containing TCS 7516 by Elkem Silicones which is a silicone-based binder resin, and a ceramic bulk fiber (ceramic fiber composed of $SiO_2$ 55wt.%, CaO 25 wt.%, and MgO 20 wt.%) was prepared. At this time, the content of the ceramic bulk fiber was adjusted to be about 10 wt.% in the final cured coating layer.

Preparation of coated fabric: A fabric was prepared from a PET fiber having a fineness of 550 dtex. Specifically, a fabric (1 layer) having a fabric density of 46 x 46 th/inch (warp x weft) was prepared, and the prepared composition was coated onto the fabric at a level of about 87 gsm. Then, curing was carried out at a temperature of 160 to 190°C for at least 1 minute 30 seconds using a hot air chamber, and a woven fabric was prepared. The weight of the prepared coated fabric was 315 g/m$^2$, and the thickness was about 0.33 mm (see Fig. 2 ).

**Comparative Example 1**

Preparation of coating composition: TCS 7517 by Elkem Silicones was prepared as a silicone-based binder resin.

Preparation of coated fabric: A fabric was prepared from a PA66 fiber having a fineness of 470 dtex. Specifically, a fabric (1 layer) having a fabric density of 46 x 46 th/inch (warp x weft) was prepared. Then, the prepared coating composition was coated onto the prepared fabric at a level of about 122 gsm (the coating amount was about 50 gsm more than in Example 1), and then cured under the same conditions as in Example 1. The weight of the prepared coated fabric was 308 g/m$^2$ and the thickness was about 0.33 mm.

**Comparative Example 2**

Preparation of coating composition: DC3730 by Dow Corning which is a urethane-based binder resin was prepared.

Preparation of coated fabric: A fabric was prepared from a PA66 fiber having a fineness of 470 dtex. Specifically, a fabric having a fabric density of 112 x 96 th/inch (warp x weft) was prepared (binded 2 layers. Unlike Example and Comparative Example 1, a two-layer fabric was used). Then, the prepared composition was coated onto the fabric at a level of about 69 gsm. The weight of the prepared coated fabric was 512 g/m$^2$ and the thickness was about 0.66 mm.

**Evaluation 1: Evaluation of Heat Resistance Durability of Coated Fabrics**

The heat resistance of the coated fabrics prepared in Examples and Comparative Examples was evaluated by the following method.

1. HOT-ROD evaluation

Specifically, a columnar rod (10 mm in diameter, 80 mm in length, and 50 g in weight) was prepared, and the rod was heated to the desired 600°C and brough into contact with the coated fabric. Then, the time (in seconds) until the rod completely melts the fabric and then falls down was measured, and the results are shown in Table 1 below.

2. Inflator damage evaluation

The heat shield fabric was wrapped as a single layer inside the jig of dual inflator for DAB (KSS), and the coated fabrics of Examples and Comparative Examples were wrapped as 6 layers to prepare a specimen (see Fig. 1a). Then, the process of deploying the airbag was simulated so that high-temperature and high-pressure gas was applied to the specimen. At this time, the high temperature and high pressure gas was controlled to be applied at a maximum pressure of 180 to 270 Kpa for 40 to 80 ms.

Then, the number (n) of damaged fabrics and the number (m) of holes found in these damaged fabrics among the five-ply coated fabrics were measured, and the weighted value of n was set to 10 and the weighted value of m was set to 1, and the evaluation results were digitized as follows. As the damage score is lower, the heat resistance is better.

$$\text{Damage score} = (n \times 10) + (m \times n \times 1)$$

[Table 1]

|  |  | Example 1 | Comparative Example 1 | Comparative Example 2 |
|---|---|---|---|---|
| HOT-ROD evaluation (sec) | | 5.3 | 4.1 | 3.6 |
| Inflator damage evaluation | Number of damaged fabric (layer) | 2 | 4 | 4 |
|  | Score | 24 | 44 | 44 |

**Evaluation 2: Comparison of heat resistance and durability by filler**

The filler type of the coated fabric prepared in Example 1 was changed as shown in Fig. 3a, and the above-mentioned HOT-ROD evaluation results were compared. Specifically, the content of the filler in the coating layer was equally applied at 5 wt.%, and HOT-ROD evaluation was conducted for the case of using CBF (ceramic bulk fiber), conventional ceramic filler (Mica (D50 number distribution size of about 40 um), Silica (D50 number distribution size of about 20-30 um), Talc (D50 number distribution size of about 20-30 um) and CF (carbon fiber) filler (about 2-3 mm in size). The Y-axis result is the arithmetic mean value (unit: seconds) after the evaluation progresses about 10 times.

**Claims**

1. A coated fabric comprising: a fibrous substrate (A), and a coating layer (B) formed on the fibrous substrate,

   wherein the coating layer comprises a binder resin and a filler,
   wherein the filler is dispersed in the coating layer,
   wherein the coating layer contains the filler in an amount of 20% by weight or less, based on 100% by weight of the entire coating layer,
   wherein the filler comprises agglomerates of chopped ceramic fibers having a size in the range of 0.1 to 2.0 mm,
   wherein the chopped ceramic fiber comprises oxides, nitrides or carbides of at least one selected among Si, Al, Ti, Zr, Ca and Mg,
   wherein a coating amount of the coating layer to one layer of the fibrous substrate is 50 gsm to 100 gsm, and
   wherein the coated fabric has a weight of 280 g/m$^2$ to 350 g/m$^2$.

2. The coated fabric according to claim 1, wherein:
   the chopped ceramic fiber comprises oxides of at least one selected among Si, Al, Ti, Zr, Ca and Mg.

3. The coated fabric according to claim 2, wherein:
   the chopped ceramic fiber comprises $SiO_2$, CaO and MgO.

4. The coated fabric according to claim 3, wherein:
   the chopped ceramic fiber contains 50 to 60% by weight of $SiO_2$, 20 to 30% by weight of CaO, and 10 to 30% by weight of MgO.

**5.** The coated fabric according to claim 1, wherein:
the binder resin comprises at least one selected among a urethane resin and a silicone resin.

**6.** The coated fabric according to claim 1, wherein:
the fibrous substrate comprises at least one selected among a polyester fiber, an aramid fiber, a nylon fiber, a carbon fiber, a polyketone fiber, a cellulose fiber, a polyolefin fiber, and an acrylic fiber.

**7.** The coated fabric according to claim 6, wherein:
the fiber contained in the fibrous substrate has a fineness in the range of 450 to 1,100 dtex.

**8.** The coated fabric according to claim 6, wherein:

the fibrous substrate is a fabric comprising warp and weft threads, and
the warp and weft densities of the fabric are within the range of 20 to 55 th/inch, respectively.

**9.** The coated fabric according to claim 1, wherein:
the coated fabric has a thickness of 0.25 to 0.40 mm.

**10.** A method for preparing a coated fabric comprising:

coating a coating composition comprising a binder resin and a filler onto a fibrous substrate and then curing the coated composition to form a coating layer,
wherein the coating layer contains the filler in an amount of 20% by weight or less, based on 100% by weight of the entire coating layer, wherein the filler comprises agglomerates of chopped ceramic fibers having a size in the range of 0.1 to 2.0 mm,
wherein the chopped ceramic fiber comprises oxides, nitrides or carbides of at least one selected among Si, Al, Ti, Zr, Ca and Mg,
wherein a coating amount of the coating layer to one layer of the fibrous substrate is 50 gsm to 100 gsm, and
wherein the coated fabric has a weight of 280 $g/m^2$ to 350 $g/m^2$.

**11.** An air bag comprising the coated fabric according to claim 1.

## Patentansprüche

**1.** Beschichtetes Gewebe, umfassend: ein faseriges Substrat (A) und eine auf dem faserigen Substrat gebildete Beschichtungsschicht (B),

wobei die Beschichtungsschicht ein Bindemittelharz und einen Füllstoff umfasst, wobei der Füllstoff in der Beschichtungsschicht dispergiert ist,
wobei die Beschichtungsschicht den Füllstoff in einer Menge von 20 Gew.-% oder weniger, bezogen auf 100 Gew.-% der gesamten Beschichtungsschicht, enthält,
wobei der Füllstoff Agglomerate von zerkleinerten Keramikfasern mit einer Größe im Bereich von 0,1 bis 2,0 mm enthält,
wobei die zerkleinerte Keramikfaser Oxide, Nitride oder Carbide von mindestens einem, ausgewählt aus Si, Al, Ti, Zr, Ca und Mg, enthält,
wobei die Beschichtungsmenge der Beschichtungsschicht auf eine Schicht des faserigen Substrats 50 $g/m^2$ bis 100 $g/m^2$ beträgt und
wobei das beschichtete Gewebe ein Gewicht von 280 $g/m^2$ bis 350 $g/m^2$ aufweist.

**2.** Beschichtetes Gewebe nach Anspruch 1, wobei:
die zerkleinerte Keramikfaser Oxide von mindestens einem, ausgewählt aus Si, Al, Ti, Zr, Ca und Mg, enthält.

**3.** Beschichtetes Gewebe nach Anspruch 2, wobei:
die zerkleinerte Keramikfaser $SiO_2$, CaO und MgO enthält.

**4.** Beschichtetes Gewebe nach Anspruch 3, wobei:
die zerkleinerte Keramikfaser 50 bis 60 Gew.-% $SiO_2$, 20 bis 30 Gew.-% CaO und 10 bis 30 Gew.-% MgO enthält.

**5.** Beschichtetes Gewebe nach Anspruch 1, wobei:
das Bindemittelharz mindestens eines, ausgewählt aus einem Urethanharz und einem Silikonharz, umfasst.

**6.** Beschichtetes Gewebe nach Anspruch 1, wobei:
das faserige Substrat mindestens eine, ausgewählt aus einer Polyesterfaser, einer Aramidfaser, einer Nylonfaser, einer Kohlenstofffaser, einer Polyketonfaser, einer Cellulosefaser, einer Polyolefinfaser und einer Acrylfaser, umfasst.

**7.** Beschichtetes Gewebe nach Anspruch 6, wobei:
die im faserigen Substrat enthaltene Faser eine Feinheit im Bereich von 450 bis 1100 dtex aufweisen.

**8.** Beschichtetes Gewebe nach Anspruch 6, wobei:

das faserige Substrat ein Gewebe, umfassend Kett- und Schussfäden, ist und
die Kett- und Schussdichte des Gewebes jeweils im Bereich von 20 bis 55 Fäden/Zoll liegt.

**9.** Beschichtetes Gewebe nach Anspruch 1, wobei:
das beschichtete Gewebe eine Dicke von 0,25 bis 0,40 mm aufweist.

**10.** Verfahren zur Herstellung eines beschichteten Gewebes, umfassend:

Beschichten eines faserigen Substrats mit einer Beschichtungszusammensetzung, umfassend ein Bindemittelharz und einen Füllstoff, und anschließendes Aushärten der Beschichtungszusammensetzung, um eine Beschichtungsschicht zu bilden,
wobei die Beschichtungsschicht den Füllstoff in einer Menge von 20 Gew.-% oder weniger, bezogen auf 100 Gew.-% der gesamten Beschichtungsschicht, enthält, wobei der Füllstoff Agglomerate von zerkleinerten Keramikfasern mit einer Größe im Bereich von 0,1 bis 2,0 mm umfasst,
wobei die zerkleinerte Keramikfaser Oxide, Nitride oder Carbide von mindestens einem, ausgewählt aus Si, Al, Ti, Zr, Ca und Mg, enthält,
wobei die Beschichtungsmenge der Beschichtungsschicht auf eine Schicht des faserigen Substrats 50 g/m$^2$ bis 100 g/m$^2$ beträgt und
wobei das beschichtete Gewebe ein Gewicht von 280 g/m$^2$ bis 350 g/m$^2$ aufweist.

**11.** Airbag, umfassend das beschichtete Gewebe nach Anspruch 1.

## Revendications

**1.** Tissu enduit comportant : un substrat fibreux (A), et une couche d'enduction (B) formée sur le substrat fibreux,

dans lequel la couche d'enduction comporte une résine liante et une charge,
dans lequel la charge est dispersée dans la couche d'enduction,
dans lequel la couche d'enduction contient la charge en une quantité de 20 % en poids ou moins, sur la base de 100 % en poids de la couche d'enduction complète,
dans lequel la charge comporte des agglomérats de fibres céramiques coupées ayant une taille dans l'intervalle de 0,1 à 2,0 mm,
dans lequel la fibre céramique coupée comporte des oxydes, des nitrures ou des carbures d'au moins un élément choisi parmi Si, Al, Ti, Zr, Ca et Mg,
dans lequel la quantité d'enduction de la couche d'enduction sur une couche du substrat fibreux est de 50 g/m$^2$ à 100 g/m$^2$, et
dans lequel le tissu enduit a un poids de 280 g/m$^2$ à 350 g/m$^2$.

**2.** Tissu enduit selon la revendication 1, dans lequel :
la fibre céramique coupée comporte des oxydes d'au moins un élément choisi parmi Si, Al, Ti, Zr, Ca et Mg.

**3.** Tissu enduit selon la revendication 2, dans lequel :
la fibre céramique coupée comporte du SiO$_2$, du CaO et du MgO.

**4.** Tissu enduit selon la revendication 3, dans lequel :
la fibre céramique coupée contient 50 à 60 % en poids de $SiO_2$, 20 à 30 % en poids de CaO et 10 à 30 % en poids de MgO.

**5.** Tissu enduit selon la revendication 1, dans lequel :
la résine liante comporte au moins un élément choisi parmi une résine d'uréthane et une résine de silicone.

**6.** Tissu enduit selon la revendication 1, dans lequel :
le substrat fibreux comporte au moins un élément choisi parmi une fibre de polyester, une fibre d'aramide, une fibre de nylon, une fibre de carbone, une fibre de polycétone, une fibre de cellulose, une fibre de polyoléfine et une fibre acrylique.

**7.** Tissu enduit selon la revendication 6, dans lequel :
la fibre contenue dans le substrat fibreux a une finesse dans l'intervalle de 450 à 1 100 dtex.

**8.** Tissu enduit selon la revendication 6, dans lequel :

le substrat fibreux est un tissu comportant des fils de chaîne et de trame, et
les densités de fils de chaîne et de trame du tissu sont dans l'intervalle de 20 à 55 fils/pouce, respectivement.

**9.** Tissu enduit selon la revendication 1, dans lequel :
le tissu enduit a une épaisseur de 0,25 à 0,40 mm.

**10.** Procédé de préparation d'un tissu enduit, comportant l'étape consistant à :

enduire un substrat fibreux d'une composition d'enduction comportant une résine liante et une charge, et durcir ensuite la composition enduite pour former une couche d'enduction,
dans lequel la couche d'enduction contient la charge en une quantité de 20 % en poids ou moins, sur la base de 100 % en poids de la couche d'enduction complète, dans lequel la charge comporte des agglomérats de fibres céramiques coupées ayant une taille dans la plage de 0,1 à 2,0 mm,
dans lequel la fibre céramique coupée comporte des oxydes, des nitrures ou des carbures d'au moins un élément choisi parmi Si, Al, Ti, Zr, Ca et Mg,
dans lequel la quantité d'enduction de la couche d'enduction sur une couche du substrat fibreux est de 50 $g/m^2$ à 100 $g/m^2$, et
dans lequel le tissu enduit a un poids de 280 $g/m^2$ à 350 $g/m^2$.

**11.** Coussin gonflable comportant le tissu enduit selon la revendication 1.

【DRAWING】

【FIG. 1a】

Main panel 5-layer (outside)

Heat shield reinforcement (Inside)

【FIG. 1b】

【FIG. 1c】

【FIG. 1d】

【FIG. 2】

【FIG. 3a】

Hot rod box drawing

【FIG. 3b】

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020200186479
- KR 1020210185280
- KR DECEMBER222021
- CN 205615111 U
- JP H02132705 A
- JP 2006321053 A
- KR 101908778 B1